Europäisches Patentamt

European Patent Office

Office européen des brevets

(19)

(11) Veröffentlichungsnummer: **0 044 356**
**B1**

(12) **EUROPÄISCHE PATENTSCHRIFT**

(45) Veröffentlichungstag der Patentschrift:
07.03.84

(21) Anmeldenummer: 80108204.1

(22) Anmeldetag: 24.12.80

(51) Int. Cl.³: **H 04 M 19/08**

(54) Schaltungsanordnung zum Anschluss eines Teilnehmerendgerätes an Teilnehmeranschlussleitung.

(30) Priorität: **23.07.80 DE 3027783**

(43) Veröffentlichungstag der Anmeldung:
**27.01.82 Patentblatt 82/4**

(45) Bekanntmachung des Hinweises auf die Patenterteilung:
**07.03.84 Patentblatt 84/10**

(84) Benannte Vertragsstaaten:
**BE DE FR GB IT LU NL**

(56) Entgegenhaltungen:
**DE - A - 2 043 611**

**FERNMELDE-PRAXIS, Band 56, Heft 24, 25. Dezember
1979, Seiten 943-952 Berlin, DE. W. BAMBACH et al.:
"Funktion der Teilnehmereinrichtungen für
Bildschirmtext"**

(73) Patentinhaber: **ANT Nachrichtentechnik GmbH,
Gerberstrasse 33, D-7150 Backnang (DE)**

(72) Erfinder: **Heilig, Thomas, Ing. grad., Industriestrasse 31,
D-7151 Allmersbach im Tal (DE)**

(74) Vertreter: **Schickle, Gerhard, Dipl.-Ing. et al, ANT
Nachrichtentechnik GmbH Patent- und Lizenzabteilung
Gerberstrasse 33, D-7150 Backnang (DE)**

## Schaltungsanordnung zum Anschluss eines Teilnehmerendgerätes an Teilnehmeranschlussleitung

Die Erfindung bezieht sich auf eine Schaltungsanordnung zum Anschluss eines Teilnehmerendgerätes an die Teilnehmeranschlussleitung eines elektrischen Netzes.

Beim Abschluss einer Teilnehmeranschlussleitung bzw. beim Anschluss eines Teilnehmerendgerätes an eine solche Leitung besteht die Forderung nach einer möglichst genauen und konstanten Anpassung an den Wellenwiderstand dieser Leitung, wobei die durch die Leitungslänge festgelegte Phasenlage kompensiert werden soll. Die einfachste Lösung dieser Aufgabenstellung ist der Abschluss der Leitung mit einem konstanten ohmschen Widerstand mit dem Wellenwiderstand der Leitung, wobei eine zusätzliche Blindkomponente die Phasenlage der Leitung berücksichtigt. Diese Lösung ist jedoch nur dann durchzuführen, wenn eine Speisung des betreffenden Teilnehmerendgerätes nicht über die Teilnehmeranschlussleitung erfolgt. Bei fast allen postalischen Netzen erfolgt jedoch eine Speisung des Teilnehmers amtsseitig. Aufgrund der unterschiedlichen Speiseströme, so ist zum Beispiel beim Anschluss eines Bildschirmtextmodems an eine Telefonteilnehmeranschlussleitung bei Speiseströmen zwischen 17 und 22 mA ein Gleichstromabschlusswiderstand von $\leq 400\,\Omega$, bei solchen von 22 bis 60 mA ein Gleichstromabschlusswiderstand von $\leq 300\,\Omega$ und für die Übertragung der Wechselstrommodemsignale ein Abschlusswiderstand von 600 $\Omega$ einzuhalten. Ohne Zuhilfenahme von induktiven und/oder transformatorischen Bauelementen sind die genannten Forderungen nicht zu erfüllen.

Durch die DE-OS Nr. 2043611 ist eine Ladeschaltung für Kondensatoren am Ende einer nur geringe Leistung übertragenden Leitung in Fernmeldeanlagen bekanntgeworden, bei der die Ladung des Kondensators mit konstantem Strom erfolgt.

Die Erfindung hat sich deshalb zur Aufgabe gestellt, eine Schaltungsanordnung der obigen Art anzugeben, mit der es möglich ist, eine konstante Impedanz ohne Zuhilfenahme von induktiven oder transformatorischen Bauelementen in unaufwendiger Weise zu erzeugen. Die Lösung erfolgt mit einer aktiven Halbleiterschaltung den Patentansprüchen gemäss.

Die Vorteile der erfindungsgemässen Lösung werden darin gesehen, dass die angegebene Schaltungsanordnung in monolithischer oder hybrider Technik (mikro)miniaturisierbar ist und in unaufwendiger und stromsparender Weise aufgebaut ist.

Es folgt nun die Beschreibung der Erfindung anhand der Ausführungsbeispiele nach den Figuren.

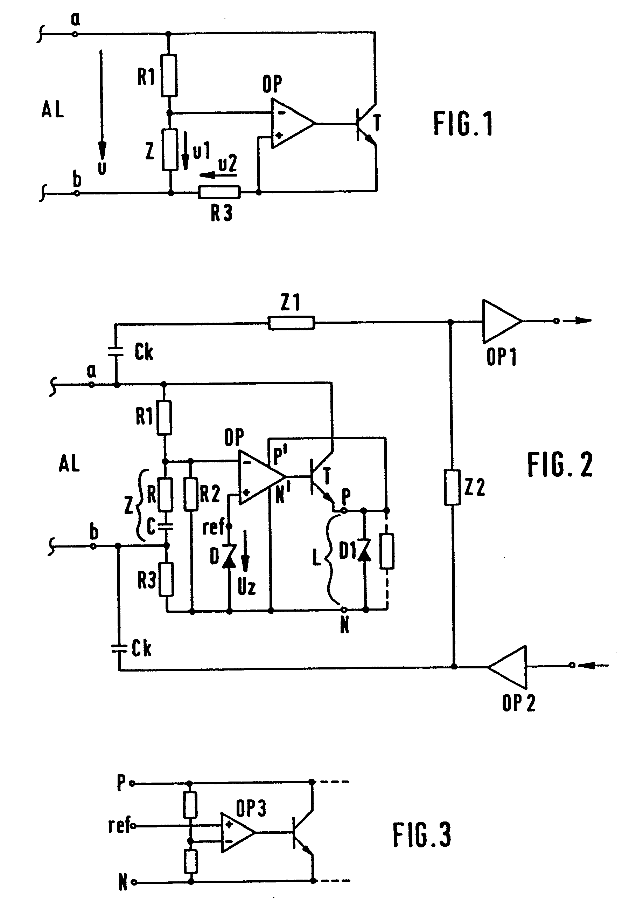

Die Fig. 1 zeigt die grundsätzliche Anordnung der Erfindung, die Fig. 2 eine besonders günstige Ausgestaltung der Erfindung. In Fig. 1 ist links die Anschlussleitung AL mit den beiden Anschlussklemmen a, b dargestellt. An die beiden Anschlussklemmen ist ein Spannungsteiler R1, Z angeschaltet sowie über einen Messwiderstand R3 ein Stelltransistor T. Die Basis des Stelltransistors T ist mit dem Ausgang eines Operationsverstärkers OP verbunden, dessen invertierender Eingang (−) mit dem Spannungsteilerpunkt und dessen nichtinvertierender Eingang (+) mit dem Emitter des npn-Stelltransistors T verbunden sind. Aufgrund der hohen Verstärkung des Operationsverstärkers stellt sich an seinem nichtinvertierenden Eingang eine zum Schleifstrom i proportionale Spannung $u2 = R3 \cdot i$ ein, die gleich der an der Impedanz Z abfallenden und zu der an den Anschlussklemmen a, b auftretenden Spannung u proportionalen Teilerspannung $u1 = u \cdot Z / (R1 + Z)$ ist. Daraus folgt unter Vernachlässigung des Stroms durch die Teilerwiderstände, dass der Eingangswiderstand den Wert $(R1 + Z) \cdot R3/Z$, d.h. eine stromunabhängige, mit Hilfe von Z festlegbare Impedanz annimmt.

Die Fig. 2 zeigt die Anschaltungsordnung nach Fig. 1 mit weiteren Details, wobei zusätzlich die Realisierung der Speisespannungserzeugung und die Wechselstromsignaleinkopplung dargestellt ist. An die beiden Anschlussklemmen a, b der Teilnehmeranschlussleitung AL ist der spannungsteiler R1, Z ersichtlich, an dessen Teilerpunkt wiederum der invertierende Eingang (−) des Operationsverstärkers OP angeschlossen ist. Die Impedanz Z besteht bei diesem Ausführungsbeispiel aus der Reihenschaltung eines ohmschen Widerstandes R mit einem Kondensator C, was einen nahezu konstanten Wechselstromwiderstand mit dem gewünschten Frequenzverhalten ergibt. Die Teilnehmerschleife wird gebildet aus der Reihenschaltung des Stelltransistors T, der zu speisenden Last L und dem Messwiderstand R3, der mit seinem einen Ende an die Anschlussklemme b der Teilnehmeranschlussleitung AL und mit seinem anderen Ende über eine Zenerdiode D mit dem nichtinvertierenden Eingang des Operationsverstärkers OP verbunden ist.

Gleichstrommässig stellt sich der Operationsverstärker auf die Spannung Uz der Zenerdiode D wie folgt ein: $Uz = U \cdot R2/(R1 + R2)$, wobei U die Gleichspannung an den Anschlussklemmen der Teilnehmeranschlussleitung AL ist und der Widerstand R2 den Teilerpunkt des Spannungsteilers R1, Z mit dem Fusspunkt der Zenerdiode D verbindet. Mit dieser Schaltung kann das Gleichspannungsverhalten der Schaltung vorteilhafterweise so festgelegt werden, dass die Teilnehmeranschlussleitung AL mit einem Gleichstromwiderstand in der geforderten Toleranzbreite bei nahezu konstanter Gleichspannung U an den Anschlussklemmen a, b abgeschlossen werden kann, wobei die Verlustleistung im Serienstelltransistor T auf einem niedrigen Wert gehalten werden kann. Die somit aus dem Schleifenstrom gewonnene Speisespannung zwischen den Klemmen P, N wird mit einer weiteren Zenerdiode D1 und eventuell mit Siebgliedern stabilisiert und den zu versorgenden aktiven Schaltungen zugeführt, welch letzteres durch die Verbindungsleitungen P, P′ bzw. N, N′ zur Versorgung des Operationsverstärkers OP und durch den gestrichelt gezeichneten Widerstand in der Zeichnung dargestellt ist. Anstelle der Zenerdiode D1 kann auch ein Querregler nach Fig. 3 eingesetzt werden, der den Vorteil einer hohen Spannungsstabilität aufweist und die an der Zenerdiode D auftretenden Temperatur- und Langzeitdriften bzw. die durch Exemplarstreuung hervorgerufenen Abweichungen in hohem Masse unterdrückt.

In Fig. 2 ist weiterhin die Einkopplung des Wechselstromsendesignals über einen entkoppelnden Operationsverstärker OP2, bzw. die Auskopplung des Empfangssignals über einen weiteren Operationsverstärker OP1 über Koppelkondensatoren Ck an die Anschlussklemme b, bzw. von der Anschlussklemme a gezeichnet. Dabei ist im Empfangssignalzweig eine weitere Impedanz Z1 und zwischen Empfangseingang und Senderausgang eine dritte Impedanz Z2 eingefügt, durch deren Bemessungen eine optimale Entkopplung zwischen Sende- bzw. Empfangssignal erzielt werden kann. Unter besonders günstigen Umständen kann auch allein durch Bemessung der ersten Impedanz Z, also unter Weglassung von den weiteren Impedanzen Z1, Z2, eine ausreichende Entkopplung zwischen Sende- bzw. Empfangssignal erreicht werden.

**Patentansprüche**

1. Schaltungsanordnung zum Anschluss eines Teilnehmerendgerätes an die Teilnehmeranschlussleitung (AL) eines elektrischen Netzes, dadurch gekennzeichnet, dass ein einen nicht- und einen invertierenden Eingang aufweisender Operationsverstärker (OP) vorgesehen ist, dessen Ausgang einen Stelltransistor (T) ansteuert, der den über die Adern der Anschlussleitung fliessenden Schleifenstrom des Teilnehmerendgerätes beeinflusst, und dass an die beiden Eingänge eine zur an der Teilnehmeranschlussleitung (AL) anstehenden Spannung proportionale erste (u1) bzw. zum Schleifenstrom proportionale zweite Spannung (u2) angelegt wird.

2. Schaltungsanordnung nach Anspruch 1, dadurch gekennzeichnet, dass der eine Eingang (−) mit dem Teilerpunkt eines Spannungsteilers (R1, Z), der parallel zur Teilnehmeranschlussleitung (AL) liegt, und der andere Eingang (+) über einen Messwiderstand (R3), über den der Schleifenstrom fliesst, mit der einen Ader (b) der Teilnehmeranschlussleitung (AL) verbunden sind.

3. Schaltungsanordnung nach Anspruch 2, dadurch gekennzeichnet, dass das eine Spannungsteilerelement eine Impedanz (Z) ist.

4. Schaltungsanordnung nach einem der vorhergehenden Ansprüche, dadurch gekennzeichnet, dass die Speisung des Operationsverstärkers (OP) und des Endgerätes durch den Schleifenstrom erfolgt.

5. Schaltungsanordnung nach den Ansprüchen 2 und 4, dadurch gekennzeichnet, dass zwischen dem anderen Eingang (+) und dem Messwiderstand (R3) eine Referenzspannung (Uz) eingefügt ist, dass der gemeinsame Punkt letzterer mit dem einen Eingang (−) über einen weiteren Widerstand (R2) verbunden ist und dass zwischen Stelltransistor (T) und Teilnehmeranschlussleitung (AL) die zu speisende Last (L) liegt.

6. Schaltungsanordnung nach einem der Ansprüche 2 bis 5, dadurch gekennzeichnet, dass der mittels Entkopplungsstufen (OP1, OP2) entkoppelte Signalein- bzw. -ausgang des Teilnehmerendgerätes jeweils über eine Kapazität (C) mit einer Ader der Teilnehmeranschlussleitung (AL) verbunden ist.

7. Schaltungsanordnung nach Anspruch 6, dadurch gekennzeichnet, dass zwischen der einen Ader (a) der Teilnehmeranschlussleitung (AL) und dem Signalein- bzw. -ausgang eine zweite (Z1) und zwischen dem Signalein- und ausgang eine dritte Impedanz (Z2) eingefügt sind.

**Revendications**

1. Circuit pour le raccordement d'un appareil d'abonné à une ligne de raccordement d'abonné (AL) d'un réseau électrique, caractérisé par un amplificateur opérationnel (OP), comportant une entrée non inverseuse et une entrée inverseuse, et dont la sortie attaque un transistor de réglage (T), qui influence le courant de boucle de l'appareil d'abonné circulant dans les conducteurs de la ligne de raccordement, et par l'application aux deux entrées d'une première tension (u1), proportionnelle à la tension appliquée à la ligne de raccordement d'abonné (AL), ou d'une seconde tension (u2) proportionnelle au courant de boucle.

2. Circuit selon la revendication 1, caractérisé en ce qu'une entrée (−) est reliée au point central d'un diviseur de tension (R1, Z), monté en parallèle avec la ligne de raccordement d'abonné (AL), et la seconde entrée (+) est reliée par une résistance de mesure (R3), parcourue par le courant de boucle, à un conducteur (b) de la ligne de raccordement d'abonné (AL).

3. Circuit selon la revendication 2, caractérisé en ce qu'un élément du diviseur de tension est une impédance (Z).

4. Circuit selon l'une des revendications 1 à 3, caractérisé en ce que l'alimentation de l'amplificateur opérationnel (OP) et de l'appareil d'abonné est assurée par le courant de boucle.

5. Circuit selon les revendications 2 et 4, caractérisé en ce qu'une tension de référence (Uz) est insérée entre la seconde entrée (+) et la résistance de mesure (R3); le point commun de ladite tension est relié à une entrée (−) par une seconde résistance (R2), et la charge à alimenter (L) est insérée entre le transistor de réglage (T) et la ligne de raccordement d'abonné (AL).

6. Circuit selon l'une des revendications 2 à 5, caractérisé en ce que l'entrée et la sortie de signal de l'appareil d'abonné, découplées par des étages de découplage (OP1, OP2), sont reliées chacune par une capacité (C) à un conducteur de la ligne de raccordement d'abonné (AL).

7. Circuit selon la revendication 6, caractérisé par l'insertion d'une seconde impédance (Z1) entre un conducteur (a) de la ligne de raccordement d'abonné (AL) et l'entrée ou la sortie de signal, et d'une troisième impédance (Z2) entre l'entrée et la sortie de signal.

**Claims**

1. Circuit arrangement for the connection of a subscriber and apparatus to the subscriber connection line (AL) of an electrical network, characterized thereby that an operational amplifier (OP) is provided, which displays a non-inverting and an inverting input, and the output of which drives a setting transistor (T), which influences the loop current of the subscriber end apparatus flowing through the cores of the connection line, and that a first voltage (u1) proportional to the voltage present at the subscriber connection line (AL) and a second voltage (u2) proportional to the loop current are respectively applied to both the inputs.

2. Circuit arrangement according to claim 1, characterized thereby that the one input (−) is connected with the tap of a voltage divider (R1, Z), which lies in parallel with the subscriber connection line (AL), and the other input (+) is connected by way of a measuring resistor (R3), through which the loop current flows, with the one core (b) of the subscriber connection line (AL).

3. Circuit arrangement according to claim 2, characterized thereby that the one voltage divider element is an impedance (Z).

4. Circuit arrangement according to one of claims 1 to 3, characterized thereby that the feeding of the operational amplifier (OP) and of the end apparatus takes place through the loop current.

5. Circuit arrangement according to claims 2 and 4, characterized thereby that a reference voltage (Uz) is inserted between the other input (+) and the measuring resistor (R3), that the common point of the letter is connected by way of a further resistor (R2) with the one input (−), and that the load (L) to be fed lies between the setting transistor (T) and the subscriber connection line (AL).

6. Circuit arrangement according to one of claims 2 to 5, characterized thereby that the signal input and the signal output, which are respectively decoupled by means of decoupling stages (OP1, OP2), of the subscriber and apparatus are each connected by way of a respective capacitance (C) with one core of the subscriber connection line (AL).

7. Circuit arrangement according to claim 6, characterized thereby that a second impedance (Z1) is inserted between the one core (a) of the subscriber connection line (AL) and one of the signal input, and the signal output and a third impedance (Z2) is inserted between the signal input and the signal output.

FIG.1

FIG. 2

FIG.3